# EUROPEAN PATENT APPLICATION

(11) **EP 2 575 061 A1**
(43) Date of publication of application: **03.04.2013**
(21) Application number: 12186710.5
(22) Date of filing: 28.09.2012
(51) Int. Cl.: G06F 17/30, H04L 29/12

(54) **Tracing domain name history within a registration via a whowas service**

(30) Priority: 29.09.2011 US 201113249085
(71) Applicant: Verisign, Inc., Reston, VA 20190 (US)
(72) Inventor: Waldron, Joseph, Reston, VA 20190 (US); Ibrahimbegovic, Jasenko, Reston, VA 20190 (US)
(74) Representative: Benson, Christopher

(57) **Abstract**

A system, method, and computer-readable medium, is described that implements a repository object history ("WhoWas") service that receives a WhoWas query to retrieve historical information about a repository object's change history, including a domain's registration activity. The WhoWas service searches repository object history information, formats it, and returns the results. The WhoWas service may be restricted to authorized users and may charge a fee for use. The service may also perform statistical data gathering based on historical WhoWas information, including on subsets of domains based on particular domain characteristics. In addition, historic IP address information and location information may be gathered and returned.

## Description

### Technical Field

This disclosure relates to Internet domain objects, specifically the querying and display of historical domain object ownership, IP address, and location information.

### Background

The domain name system (DNS) and domain name registration system have become an integral part of how consumers and businesses conduct activity on the Internet.

The DNS system works by an interrelation of registrants, registrars, and registries. For example, registries maintain operative control over a top level domain (TLD), such as the traditional .COM, .NET, .ORG, .EDU, and .GOV, as well as the newer .BIZ, .INFO, and .NAME TLDs. Registrants are the entities that "reserve" the use of a domain name in a specific TLD for a finite time. Registrars act like an intermediary between the registrants and registry. Registrars receive and process the registrants' domain name reservation requests, and provide tools and an interface to the registrant to maintain operation of its reserved names. Registries in turn receive and process requests from registrars and provide tools and an interface to the registrar to maintain operation of its customers (registrants) reserved names. The registry makes available the mechanism to reserve and update domain name registrations through the Extensible Provisioning Protocol (EPP). Registrars, who are authorized by the registry, have the ability to make reservations and check the state of domain names through the EPP. The registry provides the EPP as a communications gateway to registrars for such purposes

In addition to the traditional TLDs, new generic TLDs (gTLDs) may be applied for from the Internet Corporation for Assigned Names and Numbers (ICANN), the regulatory body pertaining to registries and registrars. The domain name registration system has also evolved to incorporate various country code TLDs (ccTLDs), each one reserved for use by a particular country, such as, .CA, .CN, .TV, and .US, associated with Canada, China, Tuvalu, and the United States, respectively. The domain name system and domain name registration system have also evolved to allow the use of alternative character sets to accommodate foreign languages.

In a typical domain name registration example, a registrant may want to reserve the domain name "example.com." To do so, the registrant would contact a registrar with a business relationship with the registry operating the .COM TLD. The registrant would query the registrar about the availability of the domain name "example" in the ".COM" namespace. The registrar in turn would query the proper registry through the EPP, and then return the results to the registrant. The registrant may then obtain a registration of the domain name by paying a registration fee and providing information required by the registry and registrar. The registry charges the registrar for the domain name registration and the registrar collects the registration fee from the registrant.

The registrar has a relationship with both the registrant and the registry, but the registry only has a direct relationship with the registrar. The registry can be a "thin registry," storing no information about the registrant, or a "thick registry," storing contact or other information about the registrant. In a "thin registry" model, any information stored about the registrant is obtained through the registrar. Thus, from the registry's perspective, the owner of the domain is the registrar.

Registration information is maintained and made available to the public through the implementation of a WHOIS server. RFC 3912 determines the WHOIS protocol specification. Because of the duality of the domain name registration process, with part of the process being a transaction between a registrant and registrar, and part of the process being a transaction between a registrar and registry, both the registry and registrant operate WHOIS servers to create a full picture of the domain registration information.

For example, in a "thin registry" model, the registry must provide registration information for a domain name, but lacks contact information. Instead, the registry's WHOIS server will respond in a WHOIS query the registrar information. A second query may then be made to the registrar's WHOIS server which will return more detailed information about the domain name.

The use of WHOIS information was probably originally to allow system administrators to be able to contact domain name administrators, but the importance of accurate WHOIS information has evolved. Other uses of WHOIS information support law enforcement and civil protection activities. For example, law enforcement officials may want to contact the owner of a domain name whose corresponding website is suspected of phishing activities. Law enforcement officials may want to contact the owner of a domain name to subpoena information about a registered user suspected of engaging in illegal activities. A company may want to contact the owner of a domain name to accuse a violation of intellectual property law by the display of copyrighted material on a website or by the use of a trademarked name, including the website domain name itself. A company may want to contact the owner of a domain name to offer to buy the domain name for its own use. Access to the owners of domain names remains an important tool and has withstood the increasing climate of privacy considerations and protections. In that respect, the owner of a domain name may be characterized as either the registrant or registrar, depending on which registration level is being considered at the time.

One problem with WHOIS information is that it only provides current information. Once a change in any of the registration information is reflected on the WHOIS server, the past information is lost. It may be useful to have access to this past information. A system is needed to provide a WhoWas server that can display the history of a domain name's WHOIS information. In addition, a repository object history server is needed to provide a history of any repository object.

In addition, a registrar and registry typically have access to IP address information associated with a registration object over the life of a registration object such as a domain name. IP address information may, amongst other IP address associations, include the logging information of the IP address of the machine from which a registration event request originated as well as IP address information associated with the registration object, such as in name servers, mail exchange servers, and domain name server A-records. A registrar or registry that offers other services associated with a registration object, such as a domain name, may also have additional IP address information associated with those services, for example, a dynamic DNS service for managing the DNS of a domain name where one or more A-records may change based on a dynamic IP address assignment scheme.

An IP address may be geocoded to determine an approximate location of the machine hosting the IP address. Any available geocoding techniques may be used to associate a captured IP address with an approximate location. Such information may be valuable for a variety of reasons, including without limitation: market research information, targeted marketing campaigns, infrastructure planning, Internet reach determinations, security logging, and trending schemes across multiple IPs within a particular geographic area.

IP address and location information may be useful in the domain context for all of these reasons in addition to the law enforcement and intellectual property enforcement reasons previously discussed. A system and method are needed to provide historical and current available IP address information along with the geolocations of the IP addresses over the life of a registration object .

### SUMMARY

A system, method, and computer-readable medium, is described that implements a repository object history service that receives a query to retrieve historical information about a repository object's change history. The repository object history service searches historical repository object change information, formats it, and returns the results. In one embodiment, the repository object history service receives a query to retrieve historical information about a domain name, searches historical domain name registration information, formats it, and returns the results. In another embodiment, the repository object history service receives a query to retrieve historical information about a repository object by its repository object identifier, searches historical change information, formats it, and returns the results showing changes to the record associated with the identifier over time

In another embodiment, historical IP address and location information may be captured as a part of the repository object history. The repository object history service may search historical IP address information associated with a repository object, format the data, and return the results. In an embodiment, the repository object history service may include location information associated with the IP addresses, the location information being determined at the historical time frame when the IP address was associated with the repository object. In an embodiment, the repository object history service may return the results including IP address information and location information determined at the historical time frame and compare that historical location information with current location of the IP address.

It is to be understood that both the foregoing general description and the following detailed description are exemplary and explanatory only and are not restrictive of the application, as claimed. In particular, unless otherwise noted, the term "historical" should be understood to encompass both past and current contexts.

The accompanying drawings, which are incorporated in and constitute a part of this specification, illustrate embodiments of the application and together with the description, serve to explain the principles of the application.

### BRIEF DESCRIPTION OF THE DRAWINGS

Figure 1 is an exemplary illustration of the interaction between the Domain Registrant, Domain Registrar, and Domain Registry;

Figure 2 is an exemplary WHOIS record provided by a Domain Registrar WHOIS server;

Figure 3 is an exemplary WHOIS record provided by a Domain Registry WHOIS server;

Figure 4 is an exemplary illustration of a WHOIS server system;

Figure 5 is an exemplary illustration of a method of processing a WhoWas information request;

Figure 6 is a more detailed exemplary illustration of the step of "Perform Lookup" found in Figure 5;

Figure 7 is an exemplary WhoWas record that may be provided by a "thin" registry;

Figure 8 is an exemplary illustration of a method of aggregating WhoWas information from multiple sources; and

Figure 9 is an exemplary record indicating IP address and location information.

### DETAILED DESCRIPTION

Reference will now be made in detail to the exemplary embodiments. Wherever possible, the same reference numbers will be used throughout the drawings to refer to the same or like parts.

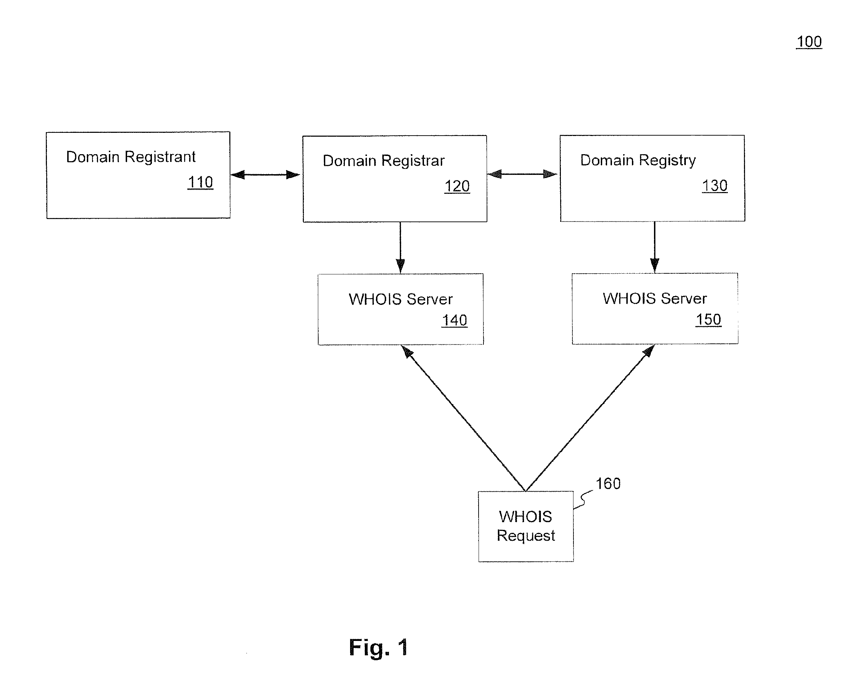

Figure 1 illustrates the data flow and relationship definition of the three primary parties involved in a domain registration. The registrant 110 is typically an end user of the domain, but in some cases, may resell the domain to either another registrant in a domain transfer transaction or may retain ownership of the domain but let a third party use it, as when the registrant is a web hosting provider and the third party is a customer of the registrant. Moreover, some registrants never intend to use a domain in a traditional fashion. Some registrants hope to reserve desirable domain names which they can sell for a profit. Other registrants may reserve a name which is a slight variation of a popular website, hoping to receive Internet traffic from people mistyping the URL of the popular website. In other words, some registrants will find new ways to use the domain name system other than for the traditional use of hosting websites associated with the domain name that directs a user to a website.

Registrants 110 reserve domain names from registrars 120. Thus, the registrant's 110 relationship is primarily with the registrar 120. The registrar, however, maintains a relationship with one or more registries 130 that control the TLD for which registration is desired. Typically, large registrars have multiple relationships with many registries to assure they can provide registrants with many TLD domain options when reserving their domains. The abstraction between the registry 130 and registrant 110 is convenient to the registrant because the registrant 110 can register all or most of its domain names from one registrar 120, rather than having to have relationships with multiple registries 130.

Registries 130 control the assignment of domain names. A registry is responsible for assuring that domain information is accurate and up to date. Further, the registry is responsible for providing first level DNS support for the TLD. For example, the registry that manages the .ORG TLD must provide (or otherwise make available) a DNS server containing nameserver information for a domain name registered through the registry so that when a website is requested via the domain name in a URL, the proper nameserver will eventually respond to the request, by providing a fully resolved domain name (that is, resolved to the IP address of the machine designated as responsible to respond for the domain name). Registrar 120 and registry 130 each comprise one or more computers to implement the functions described herein, and may correspond to functions and structures disclosed below.

Each of the registrar 120 and registry 130 may operate a WHOIS server (140 and 150, respectively). These servers provide information regarding the current registration status of a domain through a public interface. Because each WHOIS Server is associated with a different entity, the information each provides may vary. For example, if the registry 130 is a "thin" registry, it does not store the contact information of the registrant of a domain name. In a typical operation of the registry WHOIS servers 150, a registry WHOIS server 150 may, in response to a WHOIS request 160, return very basic information about when the record was created, when the domain is set to expire, when the record was last updated, and who the registrar is. A second WHOIS request 160 may then be made to the registrar WHOIS server 140 for more detailed information about the current registrant.

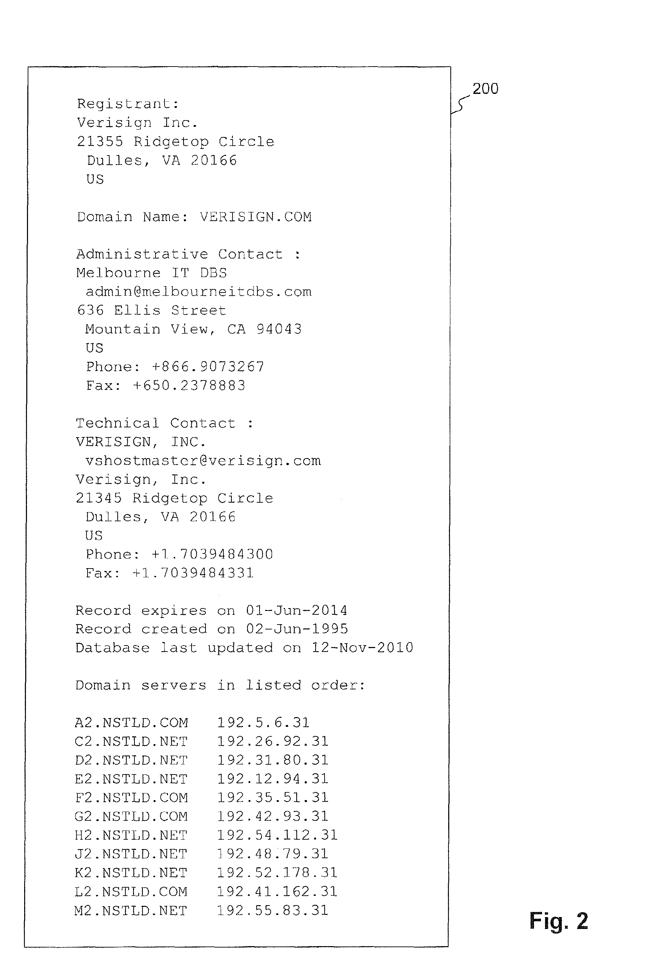

Figure 2 illustrates an exemplary registrar 120 WHOIS response 300 generated in response to a WHOIS request of a domain name from the registrar WHOIS server 140. In the exemplary response 300, the registrar displays the registrant name and address, administrative and technical contacts, the domain expiration date, the domain creation date, the date that the database was last updated, and the domain server information.

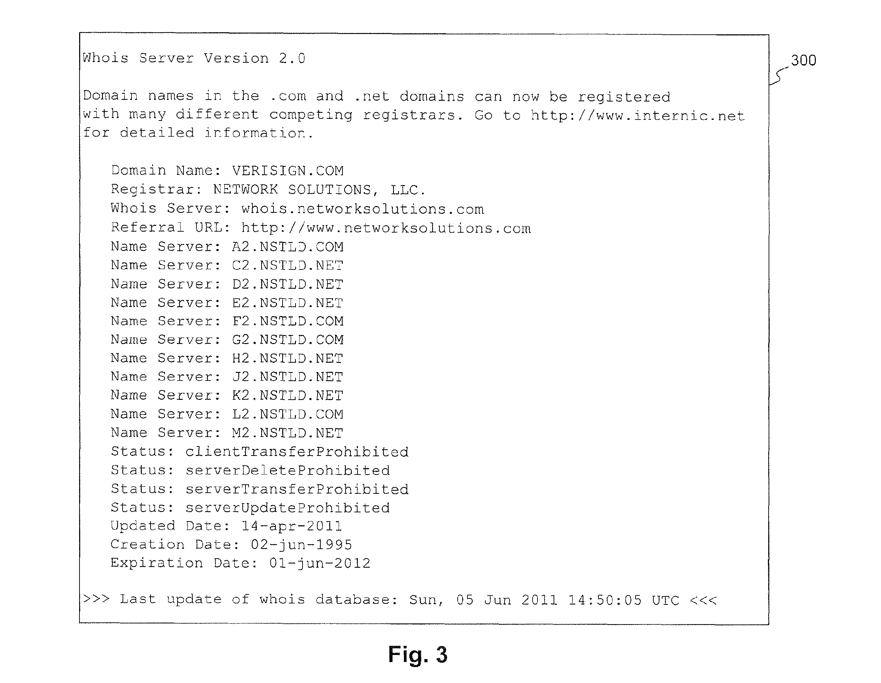

Figure 3 illustrates an exemplary registry 130 WHOIS response 300 generated in response to a WHOIS request of a domain name from the registry WHOIS server 150. In the exemplary response 300, a "thin" registry returns the Registrar, Registrar's WHOIS server address, Referral URL, Name Servers, Server Statuses, Updated Date, Creation Date, and Expiration Date. There is also an update date and time of when the WHOIS database was last updated.

In addition to domain names, other repository objects exist that may be traced historically using the embodiments presented in the disclosure. For example, host name objects operate similar to domain names. The embodiments described in the disclosure may allow a query of host name objects by building a response based on a data repository of host name changes. Similarly, another repository object are contacts. The embodiments described in the disclosure may allow a query of contact objects by building a response based on a data repository of contact changes.

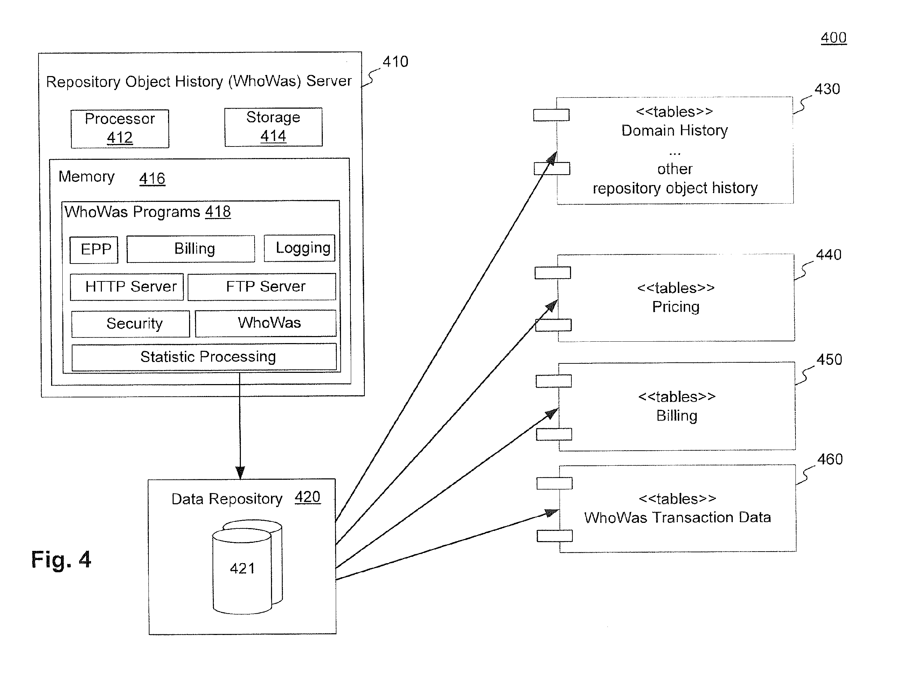

Figure 4 illustrates an exemplary embodiment of a repository object history server 410 ("WhoWas server"). The repository object history server 410 may connect to a data repository 420 that contains data used in the operation of the WhoWas server and in the lookup of repository object history information. Data repository 420 may contain one or more databases located on one or more hardware components. The databases may comprise a domain history table 430, pricing table 440, billing table 450, and transactional data table 460. The databases contained in data repository 420 may be implemented in a commercial, open source, or proprietary database program or may be contained in log files, flat files, or any other data storage mechanism. Further, data repository 420 need not be a separate system, but may be incorporated within WhoWas server 410. The databases may also comprise other history tables according to repository objects other than domain names. In processing a request for the history of a domain name, the WhoWas server may access domain history information from the domain history table 430; determine pricing based on the pricing table 440 or record pricing data in the pricing table 440; access billing information from the billing table 450 for the purpose of billing a client accessing repository object history information or for the purpose of or updating client information; or record repository object history transactional data in a WhoWas Transactional Data table 460.

In an embodiment, the domain history table 430 contains domain history events unique to the table, and not found in any other source. For example, if the domain history table 430 is provided by the registry, it may contain registration events or details unique to the registry and never published on a traditional WHOIS service (and therefore unavailable by other means of access). In particular, the domain history table 430 may contain records of domain registrations which were subsequently cancelled within the first five-days of registration; records of domain transfers, registrations, or deletions done in accordance with a court order; records of domain transfers if queried at a time when the domain was removed from the source registrar, but not yet showing in the target registrars; or actual time and date of all recorded registration events.

With regard to records of domain registrations which were subsequently cancelled within the first five days of registration, domain name registrations may be cancelled within the first five days of registration. WHOIS information for the domain name is not made available during this time period. Consequently, a registry may have registration event information for this transaction, whereas an entity that may poll a WHOIS server would not.

With regard to records of domain transfers, registrations, or deletions done in accordance with a court order, because the reasons for transfer are not normally known, they are not displayed in a WHOIS server. For example, one registrant may sell its domain registration to another registrant, or a registrant may move from one registrar to another registrar for additional services or cheaper rates. Some of the reasons for these registration events may be guessed at by examining consecutive historical registration information. When the registry performs a transfer of ownership in response to a court order, the registry may make a note of the reason for the transfer, but not include it in the WHOIS information for the domain. Externally, the transfer would look just like a change in ownership, but a WhoWas server may display the actual reason for the transfer.

With regard to records of domain transfers, queries may fail to retrieve a registration event if two occur in the intervening time between polling. For example, if queried at a time when the domain was removed from the source registrar, but not yet showing in the target registrars, it may not identify the registration since data aggregators of WHOIS data poll WHOIS servers periodically.

With regard to records of actual time and date of all recorded registration events, because data aggregators of WHOIS data poll WHOIS servers periodically, they may have information regarding the date and time the polling took place and their records were updated, rather than the actual date and time of the registration event.

Turning back to the WhoWas server 410, the WhoWas server 410 may be implemented in software as software modules or programs on one or more computing systems. For example, the functionality of the WhoWas server may comprise one or more applications, which may comprise one or more computer units of computer-readable instructions which, when executed by a processor, cause one or more computers to perform steps of a method. In particular, the exemplary modules 416 may be executed on one or more computers to accomplish the overall method. Computer-readable instructions may be stored on a computer-readable medium, such as a memory or disk. Such media typically provide non-transitory storage. One or more of the components depicted in Figure 4 may be hardware components or combinations of hardware and software such as, for example, special purpose computers or general purpose computers. A computer or computer system may also comprise an internal or external database. The database may comprise one or more individual databases or databases configured to act together. As discussed above, the database may be implemented in a commercial, open source, or proprietary database program or may be contained in log files, flat files, or any other data storage mechanism. The components of a computer or computer system may, among other things, connect through a local bus interface or over a local or wide area network.

In an embodiment, one or more of the components shown in Figure 4 may be a computer server with web services enabled. For example, the WhoWas server 410 may contain a processor web service for processing WhoWas search requests initiated from user connected via a network and through a web browser. In addition to or instead of a computer server with web services enabled, the computer server may implement other communications protocols now in existence (such as HTTP, TCP, FTP, Jabber, and EPP) or yet to be developed. WhoWas search requests may be processed over any available communications method. The components depicted in Figure 1 may be operatively connected to one another via a network, not shown, such as the Internet, an intranet, or any type of wired or wireless communication system. Connections may be implemented through a direct communication link, a local area network (LAN), a wide area network (WAN) and/or other suitable connections.

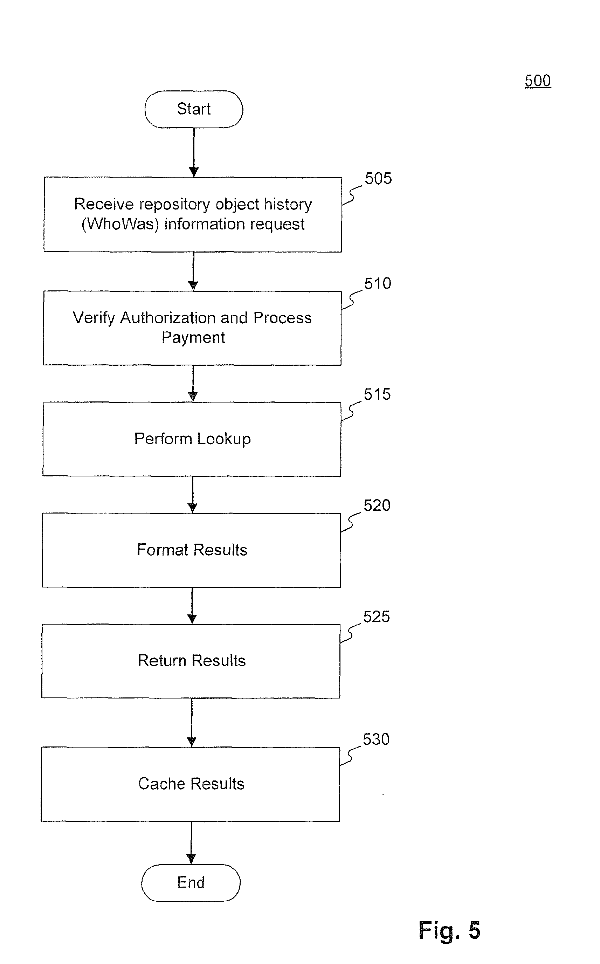

Figure 5 illustrates an exemplary embodiment processing a repository object history lookup request. A lookup request is received in step 505. The lookup request may be based on a domain name, other repository object, or may be based on a Repository Object Identifier (ROID). A lookup based on a ROID accounts for a domain name registration feature that allows a registrant to exchange one domain name for another without creating a new registration. This registration feature is described in pending U.S. Patent Application publication No. US 2012/0173685 A1, entitled "Systems and Methods for Domain Name Exchange." Whereas a lookup based on a domain name or other label such as a portion of a contact name or host name may return a history of that particular domain name, a lookup based on a ROID would return all activity associated with that ROID. Thus, a lookup based on a ROID that has been associated with multiple domain names, having been exchanged over time, may return a complete history of the exchanges, e.g., abcd.com created, exchanged for xyz.com, exchanged for 123.com, and so on.

Because a ROID may be a unique value that is inconvenient to remember such as a random string of alpha-numeric characters, the WhoWas service may allow an initial lookup by a familiar name, such as a domain name, host name, or a portion of a contact object. In the results of a lookup the WhoWas service may provide a ROID corresponding to each of the results returned. The service may make the ROID linkable to a lookup request based on the ROID object value.

The lookup request may be received as an individual or multiple lookup request via a web browser interface from either a third party user or a Customer Support Representative of the WhoWas service provider. The lookup request may also be received over a communications interface, such as in a batch file over FTP or HTTP. In an embodiment, the system may accept requests over the EPP.

In step 510, authorization may be verified and payment charged and processed, if applicable. In an embodiment, authorization is required. Authorization may be required because of concerns regarding privacy of the WhoWas information. Authorization may be required to prevent access to the WhoWas service without paying for access. If payment is required, the payment may be charged and processed. In an embodiment, payment for the service WhoWas service may be by subscription, renewed on a periodic basis.

In step 515, a lookup is performed based on a repository object history query ("WhoWas request"). The results are formatted in step 520. The WhoWas server may return an HTML page formatted to include all of the WhoWas information. In an embodiment, the WhoWas server may process a batch file and return a file in response, formatted according to input from the requestor or based on an agreed format. In step 525, the results are returned to the user. If the request was done over an HTML webpage, the results may be returned over the webpage. In an embodiment the results may be emailed or be made for available for download. In step 530, the results may be cached for some time and made available to a requestor for some time after the request was made. In an embodiment where each WhoWas request requires a per transaction payment, this feature would allow a requestor to access past requests without incurring additional fees.

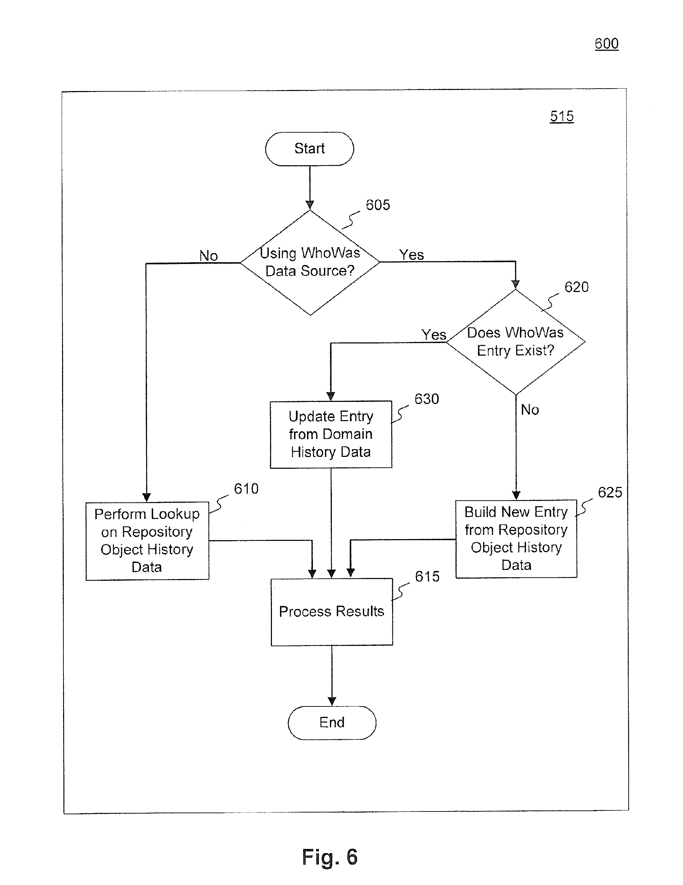

Figure 6 is an illustration of an embodiment that offers more detail of step 515. In an embodiment, step 605 considers whether an intermediary data source is used between the domain history data used to generate WhoWas information. The intermediary data source (the WhoWas data source, as referenced in Figure 6, but not shown) may be used to copy domain data from a domain history database 430 (or other repository object database) for quicker lookup later. For example, in an embodiment that allows a subscription to the WhoWas service, using an intermediary data source, a WhoWas request may be processed without transferring any information from the domain history database 430. In an embodiment, the intermediary data source may act as a cache of previous WhoWas requests. The intermediary data source may be one or more data sources such as databases, logfiles, flatfiles, or any other data storage mechanism. If an intermediary data source is not used, step 610 performs a lookup on the domain history data and step 615 processes the results of the lookup to return back to the formatting step 520 in the WhoWas request. If an intermediary data source is used, then step 620 considers whether an entry exists in the WhoWas data source. If no entry exists, then step 625 may create a new entry in the WhoWas data source and populate it with information from the domain history database 430 corresponding to a repository object history query. If an entry exists, then step 630 may update the entry in the WhoWas data source with information from the domain history database 430. Following either the creation of a new entry in the WhoWas data source or the updating of an existing entry, step 615 processes the information for the formatting step 520 in the WhoWas request.

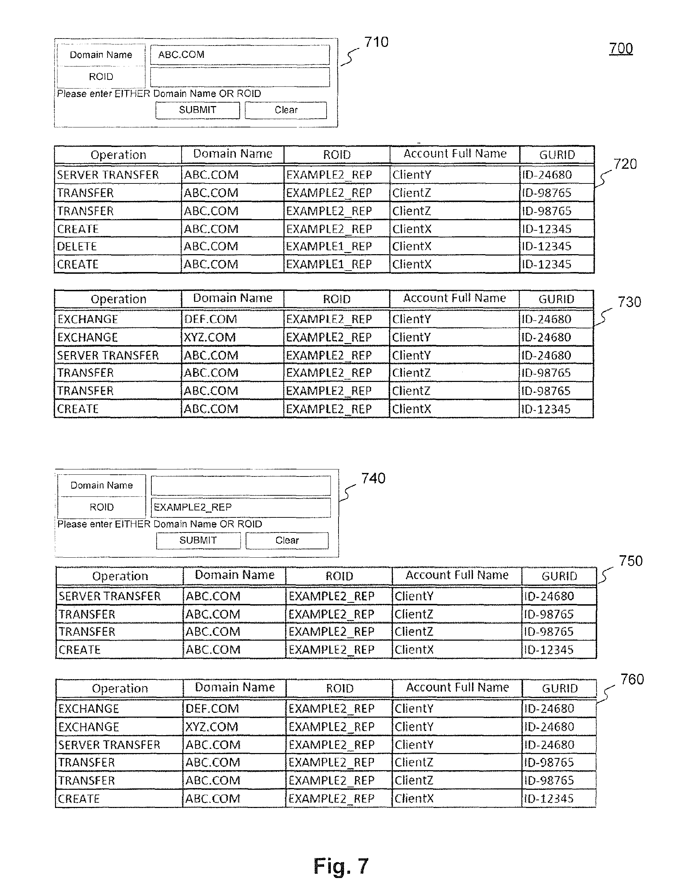

Figure 7 illustrates an exemplary embodiment of a WhoWas record. A query input 710 may accept either a ROID or domain name. Exemplary results of the query of the name "ABC.COM" without domain exchange data are found in 720. In 730, domain exchanges are supported which reveal that once a domain name is exchanged, the data for that domain would end until the next registration event. A query input 740 may also accept a ROID. Exemplary results for the query of the ROID "EXAMPLE2_REP" without domain exchange data are found in 750. In 760, domain exchanges are supported which reveal that a query on a ROID show all available exchanges for that ROID. Note that the examples of Figure 7 are exemplary only. Other data may be added or data may be taken away. In particular, contact data may be merged with the registration data to reveal a set of complex records such as in Figure 2. The WhoWas record may show each domain registration event along with when the registration event took place, which registrar was used for the registration event, and the name servers listed. If the registry is a "thick" registry, containing contact information, if the WhoWas record is generated by a registrar, or another party with contact information, then the WhoWas record may show the contact information and registrant information at the time of each of the registration events. Further, additional "Operation" data may include reasons which are not normally available in a WHOIS service, such as transfers due to court order and registration events that are reversed within the first five days.

In an embodiment, the WhoWas record may also perform some basic statistical analysis and display it along with the history of registration events. For example, the record may display, among other things, a summary showing when the first registration event occurred, the total number of registration events, when the most recent registration event occurred, the average number of registration events, and the number of times a transfer occurred, a renewal occurred, an expiration occurred, a refund occurred (within the first 5 days of registration), etc. In the case of a Domain Name Exchange WhoWas query, the WhoWas record may display a summary pertinent to this type of record. For example, it could, in addition to the types of information mentioned above, display how many times an exchange took place, and the average length of time between each exchange.

The WhoWas service may also perform a statistical analysis indicating how a particular domain's WhoWas history compares relative to all other domain names within a particular TLD or, in general, compares relative to all other domains within a particular subset which may be defined by some domain name characteristics. For example, the WhoWas service may analyze the domain name history relative to all domain names which at some point were registered through a particular registrar, or which were currently registered through a particular registrar. Then the WhoWas data provided for a particular domain could be compared to the overall data for a common domain name characteristic. In particular, the WhoWas service may, for example, compare the following: the average number of registration events with the average number of registration events over all of the domains currently registered through Registrar X; the number of times a transfer occurred with the average number of times a transfer occurred over all of the domains currently registered through Registrar X; the number of times a renewal occurred with the average number of times a renewal occurred over all of the domains currently registered through Registrar X; and how many times an expiration occurred, a refund occurred (within the first 5 days of registration).

In addition to statistical analysis and data storage and processing related to the WhoWas data, in one embodiment, query information data may be stored in a data store. For example, WhoWas queries may be logged and stored into a data store. Using the stored data, trends may be developed and analyzed corresponding to the historical domain/registrations that WhoWas users are using the WhoWas system to query. Based on these trends, data may be used to, among other things, help determine the popularity of a name.

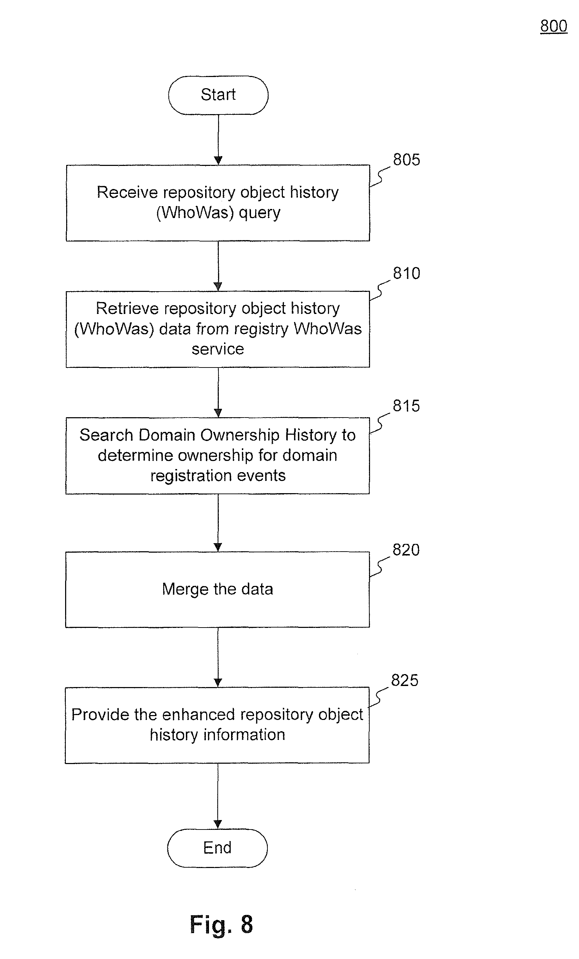

Figure 8 illustrates an exemplary embodiment showing that the record may be generated by a registrar or some other entity ("alternative WhoWas service"). The alternative WhoWas service receives, in step 805, a WhoWas request. In turn, the service queries the registry's WhoWas service in step 810 to retrieve the available WhoWas data. The alternative WhoWas service determines the proper registry to query by the TLD of the domain in the WhoWas request. In step 815, the alternative WhoWas service queries its own data (or the data of a WhoWas server operated by a particular registrar or particular registrars found in the history of the WhoWas listing) and determines, where possible, the registrant information similar to that found in Figure 2. Step 815 may be performed many times relative to the number of different registrars found in the registry WhoWas listing and that also provide a WhoWas service. In step 820, the alternative WhoWas service merges all of the collected data to create a single comprehensive WhoWas listing, including ownership data. The alternative WhoWas service provides the enhanced data to the user in step 825.

In an embodiment, the alternative WhoWas service may also perform statistical analysis of the data, similar to that explained above with respect to the WhoWas service. The alternative WhoWas service may be operated by a particular registrar with respect to only its own registration history data. The particular registrar may also attempt to collect additional contact information from other registrars or from some other WhoWas data aggregator. The alternative WhoWas service may be operated by a WhoWas data service that crawls and polls WHOIS servers, collecting domain name and other repository object information (a "WhoWas data aggregator"). However, because a WhoWas data aggregator does not have all the registration information available, some of the domain registration events may not have ownership information available. For example there may be registration events which occur before the WHOIS server is polled, registrations that are cancelled within the first five-days of registration (because they are never listed in WHOIS), or particular reasons associated with a domain transfer, such as with a court ordered domain transfer, In such circumstances, the WhoWas data aggregator may query a WhoWas service of a particular registrar or registry associated with the event lacking ownership information.

In an embodiment, IP address information may be captured and stored at each registration event and at each IP address change event. An IP address change event depends on the context of the stored IP address. For example, in an embodiment, a registrant may change hostname servers associated with its domain name without a registration event, e.g. ns1.example.com may have been previously associated with a first IP address and after the change, associated instead with a second IP address. In an embodiment where DNS information is available, a mail exchanger of priority 10 may have been associated with mail.example.com, which resolved to a first IP address, and changed to instead resolve to a second IP address. In each of these embodiments, the IP address change event may be stored, thereby creating a historical record of IP addresses over time that have been associated with a registration object, e.g., domain name.

In an embodiment, in addition to the storage of IP addresses, at the time the IP addresses were stored creating a historical record, a record of approximate locations associated with those IP addresses may also be captured using any known geolocation or comparable technique. In the above embodiments, one skilled in the art will recognize that the historical record may also include the current IP address information associated with the registration object.

In an embodiment, a query associated with the registration object may be received and processed. As a result, the IP address and location information (if available) may be returned. The query may be to a domain name, ROID, or an IP address. In the case of an IP address, if the IP address has been associated with more than one registration object, the system may retrieve all known registration objects associated with a particular IP address currently or historically.

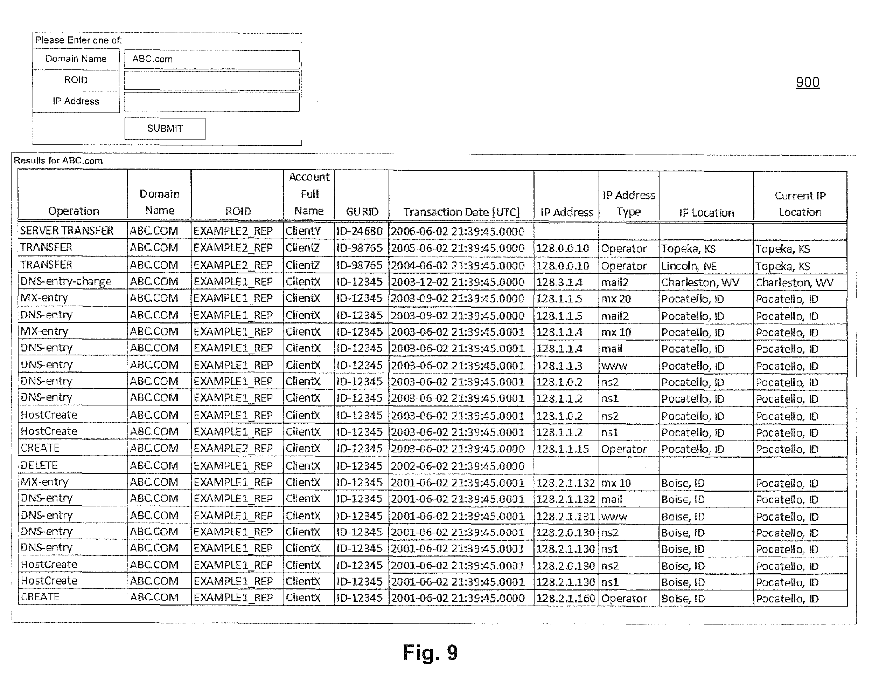

Figure 9 is an exemplary illustration demonstrating historical IP address information for a registration object. The results may be returned in a bulk data format, such as with tab or comma separated values; as a sql table definition or other database format; or simply formatted and returned to a display screen via a web browser or custom program interface, as in exemplary Figure 9. In an embodiment, as a part of returning the results, the system may also provide for a particular IP address the current location information available for the IP address.

In an embodiment, historical IP address information and location information may be used in statistical analysis and marketing models to look for localized trends among domain name registrations, web and mail server locations, and name server locations.

Other embodiments of the disclosure will be apparent to those skilled in the art from consideration of the specification and practice of the embodiments disclosed herein. In particular, it should be appreciated that the processes defined herein are merely exemplary, and that the steps of the processes need not necessarily be performed in the order presented. It is intended that the specification and examples be considered as exemplary only, with a true scope and spirit of the embodiments being indicated by the following claims.

## Claims

1. A computer-implemented method of generating repository object history information comprising:
receiving (505) a repository object history request;
querying (515) a repository object history record;
formatting (520) results from the repository object history query; and
sending (515) the results.

2. The method of claim 1, wherein the repository object history request comprises a label that includes at least one of a partial or full domain name, a partial or full host name, or a partial or full contact; and wherein the results include information related to the label.

3. The method of claim 1, wherein the repository object history request comprises a repository object identifier; wherein the results include information related to the repository object identifier; and wherein the results include information indicating that the repository object identifier has been associated with at least two different domain names.

4. The method of claim 2, wherein the results include information related to registration events, wherein the information includes a description of a registration event indicating that the event occurred in response to: a domain name registration cancellation, or a court order.

5. The method of any one of claims 1-4, comprising:
caching (530) repository object history data in a data source.

6. The method of any one of claims 1-5, comprising:
verifying (510) authorization to access WhoWas information; and
billing (510) for use of the WhoWas information.

7. The method of any one of claims 1-6, comprising:
retrieving repository object history data from a first WhoWas service;
retrieving (810) repository object history data from a second WhoWas service, wherein at least one of the first WhoWas service or second WhoWas service contains contact information for domain registration information; and
merging (820) the repository object history data from the first WhoWas service and the repository object history data from the second WhoWas service to create an integrated WhoWas record containing at least one contact information for a domain registrant.

8. The method of any one of claims 1-7, comprising:
analyzing repository object history information for statistical information, wherein the statistical information comprises: the average number of registration events, the average number of times a transfer occurred, the average number of times a renewal occurred, the average number of times an expiration occurred, and the average number of times a cancellation occurred.

9. The method of claim 8, wherein the repository object history information analyzed comprises a subset of all repository object history information based on a domain characteristic or domain characteristics including at least one of: registrar, TLD, and date range of when the domain name was first registered.

10. The method of any one of claims 1-9, comprising:
gathering historic IP address information related to the repository object history request;
gathering historic location information, wherein the historic location information was previously determined based on each historic IP address information; and
sending the historic location information along with the results.

11. The method of claim 10, comprising:
gathering current location information based on the historic IP address information; and
sending the current location information along with the historic location information.

12. The method of claim 10, wherein the historic IP address information includes either IP address information captured in the past or current IP address information.

13. The method of claim 10, wherein the historic IP address information includes IP addresses associated with at least one of: registration events, DNS server entries, or name servers assigned to a domain name.

14. The method of any one of claims 1-7 and 10-13, comprising:
logging the repository object history request in query data source; and
examining the query data source for statistical trends.

15. A system of generating repository object history information comprising:
a non-transitory memory storing instructions; and
a processor executing the instructions to cause the system to perform a method as claimed in any one of claims 1-14.

16. A non-transitory computer-readable storage medium containing instructions which, when executed on a processor, perform a method as claimed in any one of claims 1-14.
